# EUROPEAN PATENT SPECIFICATION

(11) **EP 1 860 815 B1**
(45) Date of publication and mention of the grant of the patent: **15.04.2009**
(21) Application number: 07004147.0
(22) Date of filing: 28.02.2007
(51) Int. Cl.: H04L 7/02, G06F 13/42, H04L 29/06, H04L 7/033

(54) **Data transmission method and transmission circuit thereof**
Datenübertragungsverfahren und Übertragungsschaltung dafür
Procédé de transmission de données et son circuit de transmission

(30) Priority: 24.05.2006 CN 200610081396
(43) Date of publication of application: 28.11.2007
(73) Proprietor: High Tech Computer Corp., Tao Yuan (TW)
(72) Inventor: Chu, Shih-Hung, Tao Yuan (TW); Chuang, Hsun-Hsin, Tao Yuan (TW); Peng, Ju-Chun, Tao Yuan (TW)
(74) Representative: Becker Kurig Straus

(56) References cited:
- EP-A- 1 061 453
- EP-A2- 0 280 391
- GB-A- 2 181 927
- JP-A- 2 025 140
- JP-A- 8 111 674
- US-A- 5 280 539
- "HIGH SPEED SERIAL INTERFACE PROTOCOL" IBM TECHNICAL DISCLOSURE BULLETIN, IBM CORP. NEW YORK, US, vol. 34, no. 7A, 1 December 1991 (1991-12-01), pages 355-365, XP000255572 ISSN: 0018-8689
- "DETERMINATION OF ASYNCHRONOUS LINE PARAMETERS AND DEVICE CLASS VIA SOFTWARE" IBM TECHNICAL DISCLOSURE BULLETIN, IBM CORP. NEW YORK, US, vol. 34, no. 4A, 1 September 1991 (1991-09-01), pages 39-42, XP000211221 ISSN: 0018-8689

## Description

### BACKGROUND OF THE INVENTION

### Field of the Invention

The present invention relates to a data transmission method and the transmission circuit thereof. More particularly, the present invention relates to a data transmission method and the transmission circuit thereof for transmitting a clock signal and a data signal simultaneously.

### Description of Related Art

Conventional data transmission is generally classified into parallel transmission and serial transmission. When data are transmitted through parallel transmission, more transmission pins are required between chips, and accordingly the cost of the circuit design is higher. Moreover, encoding/decoding circuits are required in parallel transmission for encoding and decoding data, so that larger circuit space is required in circuit design and electromagnetic interference may be easily caused.

Presently serial transmission is mainly accomplished by universal serial bus (USB). Differential signal transmission method is adopted by USB and additional circuit spaces are required at both the sender and the receiver for disposing relative encoding/decoding circuits, thus, data cannot be directly transmitted through software protocol. As to those hand-held electronic devices which are being designed smaller and smaller, such as PDA, intellectual cell phone, GPS, player, and game machine, etc., the disposition of additional circuit or transmission pins will increase the manufacturing cost and complexity in design.

In EP-A-1 061 453 there is disclosed a transmission method comprising transmitting a clock signal by a first pin and transmitting a data signal by a second pin, according to timing of the clock signal.

### SUMMARY OF THE INVENTION

According to one aspect of the present invention there is provided a data transmission method for transmitting data between a first apparatus, which has a first pin and a second pin, and a second apparatus, the method comprising the steps of: transmitting a clock signal by the first pin for synchronizing the first apparatus with the second apparatus; transmitting a data signal by the second pin according to the timing of the clock signal, wherein the data transmission method is characterized by further comprising the steps of: producing a first reset pulse in the clock signal; producing a second reset pulse in the data signal; and resetting the data signal according to the first reset pulse and the second reset pulse.

According to another aspect of the present invention there is provided a data transmission circuit, disposed in a first apparatus, for transmitting data between the first apparatus and a second apparatus, the data transmission circuit being characterized by comprising: a first pin for transmitting a clock signal and producing a first reset pulse in the clock signal; a second pin for transmitting a data signal between the first apparatus and the second apparatus according to the timing of the clock signal and producing a second reset pulse in the data signal, and an operation unit for resetting the data signal according to the first reset pulse and the second reset pulse.

Accordingly, the present invention provides a data transmission method and the transmission circuit thereof for transmitting a clock signal and a data signal simultaneously, wherein data transmission between a host and a peripheral apparatus is controlled by software protocols and flexibility in the setting of data transmission is increased.

According to another aspect of the present invention, a data transmission method and the transmission circuit thereof are provided, wherein data transmission between the host and the peripheral apparatus can be accomplished with only two pins, so that the cost of circuit design and the space required by the circuit can be reduced.

The present invention provides a data transmission method and the transmission circuit thereof for transmitting data between a host and a peripheral apparatus. The data transmission method includes following steps. First, a clock signal is transmitted by a first pin, and then a data signal is transmitted by a second pin according to the timing of the clock signal. The clock signal is output from the host to the peripheral apparatus.

The foregoing data signal includes a data reset pulse, an address signal block, a reading/writing determination block, a data block, a pre-acknowledgement block, and an after-acknowledgement block. The data reset pulse resets the data signal at the reset pulse produced by the clock signal, and the address signal block is used for transmitting address data. The reading/writing determination block is used for transmitting reading/writing determination data to set the reading/writing status of the data signal, and the data block is used for transmitting data between the host and the peripheral apparatus and adjusting the data transmission direction between the host and the peripheral apparatus according to the reading/writing status of the data signal.

According to the present invention, data are transmitted through software protocol, thus, there is great flexibility in transmission settings, the transmission protocol can be adjusted any time according to different using environment, and the circuit needs not to be changed, so that the cost can be reduced. Meanwhile, according to the present invention, data transmission can be accomplished with only two pins, thus, the space required by the circuit and the device cost thereof can be reduced effectively.

In order to make the aforementioned and other objects, features and advantages of the present invention comprehensible, a preferred embodiment accompanied with figures is described in detail below.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram illustrating the data transmission format according to an embodiment of the present invention.

FIG. 2 is a waveform of the data transmission format according to an embodiment of the present invention.

FIG. 3 is a schematic diagram of a data transmission circuit according to another embodiment of the present invention.

### DESCRIPTION OF EMBODIMENTS

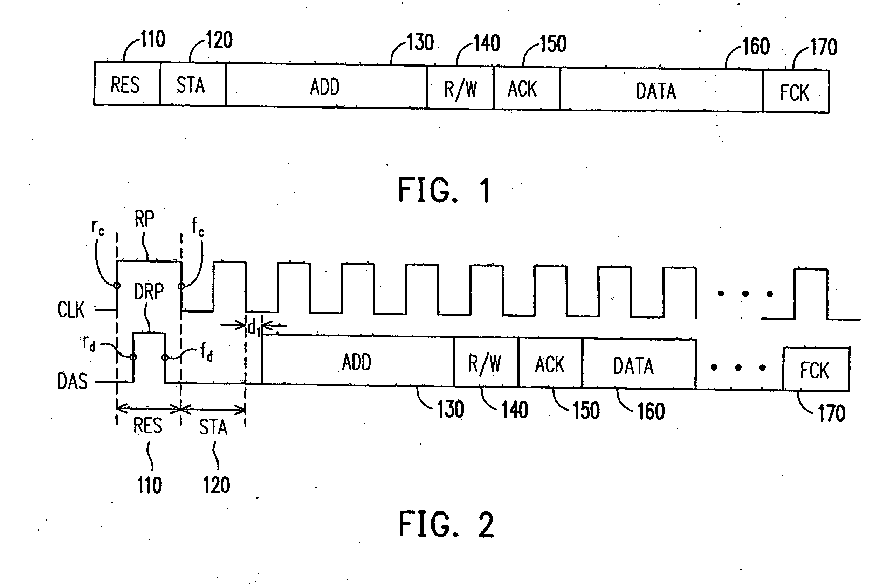

FIG. 1 is a diagram illustrating the data transmission format according to an embodiment of the present invention. Two pins are used for transmitting data between a host and a peripheral apparatus when a data signal is to be transmitted between the host and the peripheral apparatus. First, the host transmits a clock signal to the peripheral apparatus through a first pin to set up a synchronous clock between the host and the peripheral apparatus. Next, the data signal is transmitted between the host and the peripheral apparatus through another pin.

As shown in FIG. 1, the data transmission format in the present embodiment includes a reset block 110, a start block 120, an address signal block 130, a reading/writing determination block 140, a pre-acknowledgement block 150, a data block 160, and an after-acknowledgement block 170.

Wherein during transmission of the data signal, as long as the reset signal RES in the reset block 110 appears, the host and the peripheral apparatus reset the data signal, that is, the host and the peripheral apparatus re-produce the start block 120, the address signal block 130, the reading/writing determination block, 140, the pre-acknowledgement block 150, the data block 160, and the after-acknowledgement block 170 in sequence. The production of the reset signal RES is controlled by the host, which includes producing a reset pulse in the clock signal and producing a data reset pulse in the data signal. Wherein, during the occurring period of the reset pulse, the data signal produces the data reset pulse, and the rising edge of the data reset pulse is after the rising edge of the reset pulse, the falling edge of the data reset pulse is before the falling edge of the reset pulse.

The host transmits a start data STA to the peripheral apparatus in the start block 120 to inform the peripheral apparatus to start the data transmission. Then, the host transmits an address data Add in the address signal block 130 to the peripheral apparatus for connecting the data and the address. Next, the host transmits a reading/writing determination data R/W in the reading/writing determination block 140 to the peripheral apparatus, wherein the reading/writing determination data R/W can be divided into reading status and writing status. After the peripheral apparatus has completed receiving the foregoing reset signal RES, start data STA, address data ADD, and reading/writing determination data R/W transmitted by the host, the peripheral apparatus transmits a pre-acknowledgement data ACK in the pre-acknowledgement block 150 to the host to inform the host to transmit the data DATA.

The data DATA is divided into apparatus data and system data. In the data block 160, the peripheral apparatus transmits the apparatus data to the host if the reading/writing determination data R/W is in reading status, and the host transmits the system data to the peripheral apparatus for performing writing operation if the reading/writing determination data R/W is in writing status. After completing the transmission of the data DATA, the peripheral apparatus transmits an after-acknowledgement data FCK to the host in the after-acknowledgement block 170 to show that the operation has been completed.

Next, the technology of the present invention will be further described with reference to a signal waveform. FIG. 2 is a waveform of the data transmission format according to the present embodiment. The clock signal CLK is a continuous pulse signal, and the other pulse cycles are identical except the reset pulse RP in the reset block 110. When the host needs to reset the transmission of the data signal DAS, the clock signal CLK produces the reset pulse RP in the reset block 110, and the data signal DAS produces a data reset pulse DRP. The rising edge r_{d} of the data reset pulse DRP is after the rising edge r_{c} of the reset pulse RP, and the falling edge f_{d} of the data reset pulse DRP is before the falling edge f_{c} of the reset pulse RP. The combination of the reset pulse RP and the data reset pulse DRP is the reset signal RES.

The peripheral apparatus resets and re-receives the data signal DAS transmitted by the host when the peripheral apparatus receives the reset signal. Next, the host transmits the start signal STA to the peripheral apparatus, and in the present embodiment, the length of the start block 120 is 1 bit, and the start signal STA is logic low voltage level. Since in the present embodiment, the system performs data latching at the rising edge of the clock signal CLK and data transforming at the falling edge of the clock signal CLK, thus, after a short circuit operation delay time d₁, the host outputs the address data ADD to the peripheral apparatus. In the present embodiment, the length of the address signal block 130 is 3 bits, accordingly the length of the address data ADD is also 3 bits.

The main function of the reading/writing determination data R/W is to set the reading/writing status of the data signal DAS in the data block 160. In the present embodiment, the length of the reading/writing determination block 140 is 1 bit, if the reading/writing determination data R/W is logic high voltage level, the data signal DAS is in reading status. When the data signal DAS is in reading status, the peripheral apparatus transmits an apparatus data in the data block 160 to the host. If the reading/writing determination data R/W is logic low voltage level, the data signal DAS is in writing status. When the data signal DAS is in writing status, the host transmits a system data in the data block 160 to the peripheral apparatus.

Certainly, in another embodiment of the present invention, it can be set to that the data signal DAS is in reading status when the reading/writing determination data R/W is logic low voltage level and the data signal DAS is in writing status when the reading/writing determination data R/W is logic high voltage level, which should be easily understood by those having ordinary knowledge in the art and therefore will not be described herein.

There are respectively pre-acknowledgement block 150 and after-acknowledgement block 170 before and after the data block 160, in the present embodiment, the lengths thereof are both 1 bit. The pre-acknowledgement data ACK and after-acknowledgement data FCK transmitted by the pre-acknowledgement block 150 and after-acknowledgement block 170 are both logic high voltage levels. After the peripheral apparatus has completed receiving the address data ADD and the reading/writing determination data R/W, the peripheral apparatus transmits the pre-acknowledgement data ACK to the host. When the peripheral apparatus has finished data transmission in data block 160 with the host, the peripheral apparatus transmits the after-acknowledgement data FCK to the host to inform the host that the transmission has been completed. In the present embodiment, the length of the data block 160 is 8 bits, accordingly the length of the data DATA is also 8 bits.

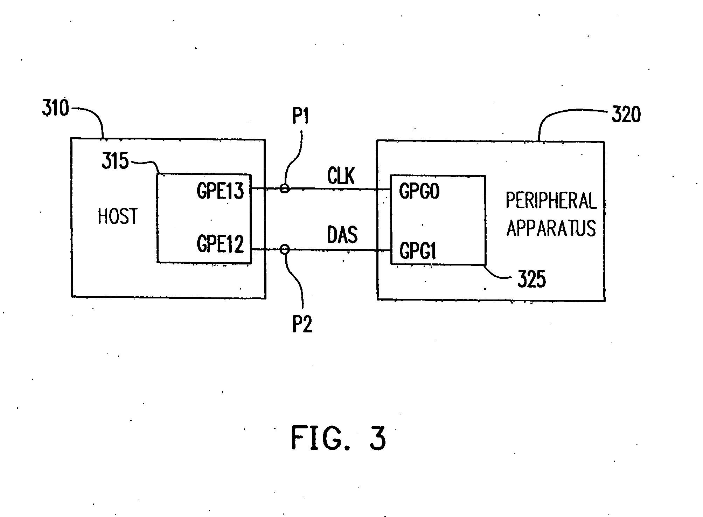

FIG. 3 is a schematic diagram of a data transmission circuit according to another embodiment of the present invention. The host 310 and the peripheral apparatus 320 are connected through pins P 1 and P2, wherein pin P 1 transmits the clock signal CLK while pin P2 transmits the data signal DAS. The clock signal CLK is transmitted by the host 310 to the peripheral apparatus 320 for setting up a synchronous clock between the host 310 and the peripheral apparatus 320 as the clock basis for data transmission between the host 310 and the peripheral apparatus 320.

The host 310 further includes a host operation unit 315 while the peripheral apparatus 320 includes a peripheral operation unit 325, wherein the host operation unit 315 and the peripheral operation unit 325 respectively transmit and receive the clock signal CLK and the data signal DAS between the host 310 and the peripheral apparatus 320. In the present embodiment, the host operation unit 315 and the peripheral operation unit 325 can be both microprocessors, for example, complex programmable logic devices (CPLD). Accordingly, the communication protocol between the host 310 and the peripheral apparatus 320 can be completed through the settings of software program. The pins GPE 12 and GPE 13 of the host operation unit 315 are respectively coupled to the pins GPE1 and GPE0 of the peripheral operation unit 325 through the pins P 1 and P2.

In the present embodiment, the transmission methods of the clock signal CLK and the data signal DAS are similar to those in the embodiment as shown in FIG. 1 and FIG. 2 and should be easily understood from the foregoing description of the embodiment in FIG. 1 and FIG. 2 by those having ordinary knowledge in the art, therefore will not be described herein.

All the data transmission protocol in the present invention can be accomplished through software settings and no additional encoding/decoding circuit is required, thus, in the present invention, the status meaning represented by the bit length and logic voltage level of each block can be set according to different requirement and should be easily understood by those having ordinary knowledge of the art, therefore will not be described herein. Moreover, the present invention can also be applied to the data transmission between two circuits and is not limited to data transmission between a host and a peripheral apparatus as described in the present embodiment.

In the present invention, data transmission is accomplished through software protocols so that the transmission protocols can be changed according to the requirement of different using environment without updating the hardware circuit design. In addition, in the present invention, data transmission can be accomplished by using only two pins, which makes debugging easier and can reduce the space required by and cost of the circuit.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A data transmission method for exchanging data between a first apparatus (310), which has a first pin (GPE13) and a second pin (GPE12), and a second apparatus (32), the method comprising the steps of:
transmitting a clock signal (CLK) by the first pin for synchronizing the first apparatus with the second apparatus;
transmitting a data signal (DAS) by the second pin according to the timing of the clock signal, wherein the data transmission method is **characterized by** further comprising the steps of:
producing a first reset pulse (RP) in the clock signal;
producing a second reset pulse (DRP) in the data signal while said first reset pulse is active; and
resetting the data signal according to the first reset pulse (RP) and the second reset pulse (DRP).

2. The data transmission method as claimed in claim 1, wherein the step of transmitting the clock signal includes the step of transmitting the clock signal from the first apparatus to the second apparatus.

3. The data transmission method as claimed in claim 1, wherein the step of transmitting data signal comprises:
transmitting an address data (130);
transmitting a reading/writing determination data (140); and
transmitting data bits (160) between the first apparatus and the second apparatus according to the address data and the reading/writing determination data;
wherein if the reading/writing determination data is a first voltage level, the data bits are transmitted from the first apparatus to the second apparatus, and
wherein if the reading/writing determination data is a second voltage level, the data bits are transmitted from the second apparatus to the first apparatus.

4. The data transmission method as claimed in claim 1, wherein the second reset pulse (DRP) is produced during the occurring period of the first reset pulse (RP), and the rising edge of the second reset pulse (DRP) is after the rising edge of the first reset pulse (RP), and the falling edge of the second reset pulse (DRP) is before the falling edge of the first reset pulse (RP).

5. The data transmission method as claimed in claim 3, wherein the step of transmitting the data signal comprises:
receiving the second reset pulse, the address data, and the reading/writing determination data by the second apparatus;
transmitting a pre-acknowledgement data (150) from the second apparatus to the first apparatus after the receiving step; and
transmitting an after-acknowledgement data (170) from the second apparatus to the first apparatus after the step of transmitting data bits between the first apparatus and the second apparatus.

6. A data transmission circuit, arranged to be disposed in a first apparatus (310), for transmitting data between the first apparatus (310) and a second apparatus (320), the data transmission circuit being **characterized by** comprising:
a first pin (GPE13) for transmitting a clock signal (CLK) and producing a first reset pulse in the clock signal;
a second pin (GPE12) for transmitting a data signal (DAS) between the first apparatus and the second apparatus according to the timing of the clock signal and for producing a second reset pulse (DRP) in the data signal while said first reset pulse is active, and
an operation unit (315) for resetting the data signal according to the first reset pulse (RP) and the second reset pulse (DRP).

7. The data transmission circuit as claimed in claim 6, wherein the first reset pulse and the second reset pulse have the same voltage levels.

8. The data transmission circuit as claimed in claim 6, wherein the data signal comprises:
an address data (130);
a reading/writing determination data (140); and
data bits (160) transmitted between the first apparatus and the second apparatus, according to the address data and the reading/writing determination data;
wherein if the reading/writing determination data is a first voltage level, the data bits are transmitted from the first apparatus to the second apparatus, and
wherein if the reading/writing determination data is a second voltage level, the data bits are transmitted from the second apparatus to the first apparatus.

9. The data transmission circuit as claimed in claim 8, wherein the second pin produces the second reset pulse during the occurring period of the first reset pulse, and the rising edge (r_{d}) of the second reset pulse occurs after the rising edge (r_{c}) of the first reset pulse, the falling edge (f_{d}) of the second reset pulse occurs before the falling edge (f_{c}) of the first reset pulse.

10. The data transmission circuit as claimed in claim 6, wherein the operation unit is a complex programmable logic device (CPLD) having the first pin and the second d pin.

## Patentansprüche

1. Datenübertragungsverfahren zum Austausch von Daten zwischen einem ersten Gerät (310), das einen ersten Anschluss (GPE13) und einen zweiten Anschluss (GPE12) aufweist, und einem zweiten Gerät (32), wobei das Verfahren folgende Schritte umfasst:
Übertragen eines Taktsignals (CLK) durch den ersten Anschluss, um das erste Gerät mit dem zweiten Gerät zu synchronisieren;
Übertragen eines Datensignals (DAS) durch den zweiten Anschluss gemäß der Zeitvorgabe des Taktsignals, wobei das Datenübertragungsverfahren **dadurch gekennzeichnet ist, dass** es die weiteren Schritte umfasst:
Erzeugen eines ersten Rücksetzimpulses (RP) im Taktsignal;
Erzeugen eines zweiten Rücksetzimpulses (DRP) im Datensignal, während der erste Rücksetzimpuls aktiv ist; und
Rücksetzen des Datensignals gemäß dem ersten Rücksetzimpuls (RP) und dem zweiten Rücksetzimpuls (DRP).

2. Datenübertragungsverfahren gemäß Anspruch 1, wobei der Schritt des Übertragens des Taktsignals den Schritt des Übertragens des Taktsignals vom ersten Gerät zum zweiten Gerät beinhaltet.

3. Datenübertragungsverfahren gemäß Anspruch 1, wobei der Schritt des Übertragens des Datensignals umfasst:
Übertragen von Adressdaten (130);
Übertragen von Lese/Schreib-Bestimmungsdaten (140); und
Übertragen von Datenbits (160) zwischen dem ersten Gerät und dem zweiten Gerät gemäß den Adressdaten und den Lese/Schreib-Bestimmungsdaten; wobei
wenn die Lese/Schreib-Bestimmungsdaten ein erstes Spannungsniveau darstellen, die Datenbits von dem ersten Gerät zum zweiten Gerät übertragen werden, und wenn die Lese/Schreib-Bestimmungsdaten ein zweites Spannungsniveau darstellen, die Datenbits von dem zweiten Gerät zum ersten Gerät übertragen werden.

4. Datenübertragungsverfahren gemäß Anspruch 1, wobei der zweite Rücksetzimpuls (DRP) während der Zeitspanne des Auftretens des ersten Rücksetzimpulses (RP) erzeugt wird, und die Anstiegsflanke des zweiten Rücksetzimpulses (DRP) sich hinter der Anstiegsflanke des ersten Rücksetzimpulses (RP) befindet, und die Abfallflanke des zweiten Rücksetzimpulses (DRP) sich vor der Abfallflanke des ersten Rücksetzimpulses (RP) befindet.

5. Datenübertragungsverfahren gemäß Anspruch 3, wobei der Schritt des Übertragens des Datensignals umfasst:
Empfangen des zweiten Rücksetzimpulses, der Adressdaten und der Lese/Schreib-Bestimmungsdaten durch das zweite Gerät;
Übertragen von Vor-Bestätigungsdaten (150) vom zweiten Gerät zum ersten Gerät nach dem Empfangsschritt; und
Übertragen von Nach-Bestätigungsdaten (170) vom zweiten Gerät zum ersten Gerät nach dem Schritt der Übertragung von Datenbits zwischen dem ersten Gerät und dem zweiten Gerät.

6. Datenübertragungsschaltkreis, der eingerichtet ist, in einem ersten Gerät (310) platziert zu werden, um Daten zwischen dem ersten Gerät (310) und einem zweiten Gerät (320) zu übertragen, wobei der Datenübertragungsschaltkreis **dadurch gekennzeichnet ist, dass** er folgendes umfasst:
einen ersten Anschluss (GPE13), um ein Taktsignal (CLK) zu übertragen und
einen ersten Rücksetzimpuls im Taktsignal zu erzeugen;
einen zweiten Anschluss (GPE12), um ein Datensignal (DAS) zwischen dem ersten Gerät und dem zweiten Gerät gemäß der Zeitvorgabe des Taktsignals zu übertragen und um einen zweiten Rücksetzimpuls (DRP) in dem Datensignal zu erzeugen, während der erste Rücksetzimpuls aktiv ist;
eine Betriebseinheit (315) zum Rücksetzen des Datensignals gemäß dem ersten Rücksetzimpuls (RP) und dem zweiten Rücksetzimpuls (DRP).

7. Datenübertragungsschaltkreis gemäß Anspruch 6, wobei der erste Rücksetzimpuls und der zweite Rücksetzimpuls gleiche Spannungsniveaus aufweisen.

8. Datenübertragungsschaltkreis gemäß Anspruch 6, wobei das Datensignal umfasst:
Adressdaten (130);
Lese/Schreib-Bestimmungsdaten (140); und
Datenbits (160), die zwischen dem ersten Gerät und dem zweiten Gerät gemäß den Adressdaten und den Lese/Schreib-Bestimmungsdaten übertragen werden; wobei wenn die Lese/Schreib-Bestimmungsdaten ein erstes Spannungsniveau darstellen, die Datenbits von dem ersten Gerät zum zweiten Gerät übertragen werden, und
wenn die Lese/Schreib-Bestimmungsdaten ein zweites Spannungsniveau darstellen, die Datenbits von dem zweiten Gerät zum ersten Gerät übertragen werden

9. Datenübertragungsschaltkreis gemäß Anspruch 8, wobei der zweite Anschluss den zweiten Rücksetzimpuls während der Zeitspanne des Auftretens des ersten Rücksetzimpulses erzeugt, und die Anstiegsflanke (r_{d}) des zweiten Rücksetzimpulses sich hinter der Anstiegsflanke (rₑ)des ersten Rücksetzimpulses befindet, und die Abfallflanke (f_{d}) des zweiten Rücksetzimpulses sich vor der Abfallflanke (f_{c}) des ersten Rücksetzimpulses (RP) befindet.

10. Datenübertragungsschaltkreis gemäß Anspruch 6, wobei die Betriebseinheit eine komplexe programmierbare logische Vorrichtung (CPLD) mit dem ersten Anschluss und dem zweiten Anschluss ist.

## Revendications

1. Procédé de transmission de données pour échanger des données entre un premier appareil (310), qui a une première broche (GPE13) et une deuxième broche (GPE12), et un deuxième appareil (32), le procédé comprenant les étapes consistant à :
transmettre un signal d'horloge (CLK) par la première broche pour synchroniser le premier appareil avec le deuxième pareil ;
transmettre un signal de données (DAS) par la deuxième broche en fonction du timing du signal d'horloge, dans lequel le procédé de transmission de données est **caractérisé en ce qu'**il comprend en outre les étapes consistant à :
produire une première impulsion de réinitialisation (RP) dans le signal d'horloge ;
produire une deuxième impulsion de réinitialisation (DRP) dans le signal de données pendant que la première impulsion de réinitialisation est active ; et
réinitialiser le signal de données en fonction de la première impulsion de réinitialisation (RP) et de la deuxième impulsion de réinitialisation (DRP).

2. Procédé de transmission de données selon la revendication 1, dans lequel l'étape consistant à transmettre le signal d'horloge comprend l'étape consistant à transmettre le signal d'horloge du premier appareil au deuxième appareil.

3. Procédé de transmission de données selon la revendication 1, dans lequel l'étape consistant à transmettre le signal de données comprend les étapes consistant à :
transmettre une donnée d'adresse (130) ;
transmettre une donnée de détermination de lecture/écriture (140) ; et
transmettre des bits de données (160) entre le premier appareil et le deuxième appareil en fonction de la donnée d'adresse et de la donnée de détermination de lecture/écriture ;
dans lequel si la donnée de détermination de lecture/écriture est un premier niveau de tension, les bits de données sont transmis du premier appareil au deuxième appareil, et
dans lequel si la donnée de détermination de lecture/écriture est un deuxième niveau de tension, les bits de données sont transmis du deuxième appareil au premier appareil.

4. Procédé de transmission de données selon la revendication 1, dans lequel la deuxième impulsion de réinitialisation (DRP) est produite pendant la période de survenance de la première impulsion de réinitialisation (RP), et le front montant de la deuxième impulsion de réinitialisation (DRP) est après le front montant de la première impulsion de réinitialisation (RP), et le front descendant de la deuxième impulsion de réinitialisation (DRP) est avant le front descendant de la première impulsion de réinitialisation (RP).

5. Procédé de transmission de données selon la revendication 3, dans lequel l'étape consistant à transmettre le signal de données comprend les étapes consistant à :
recevoir la deuxième impulsion de réinitialisation, la donnée d'adresse et la donnée de détermination de lecture/écriture par le deuxième appareil ;
transmettre une donnée de pré-accusé de réception (150) du deuxième appareil au premier appareil après l'étape de réception ; et
transmettre une donnée d'après-accusé de réception (170) du deuxième appareil au premier appareil après l'étape de transmission de bits de données entre le premier appareil et le deuxième appareil.

6. Circuit de transmission de données agencé pour être disposé dans un premier appareil (310), pour transmettre des données entre le premier appareil (310) et un deuxième appareil (320), le circuit de transmission de données étant **caractérisé en ce qu'**il comprend :
une première broche (GPE13) pour transmettre un signal d'horloge (CLK) et produire une première impulsion de réinitialisation dans le signal d'horloge ;
une deuxième broche (GPE12) pour transmettre un signal de données (DAS) entre le premier appareil et le deuxième appareil en fonction du timing du signal d'horloge et pour produire une deuxième impulsion de réinitialisation (DRP) dans le signal de données pendant que la première impulsion de réinitialisation est active, et
une unité d'exploitation (315) pour réinitialiser le signal de données en fonction de la première impulsion de réinitialisation (RP) et de la deuxième impulsion de réinitialisation (DRP).

7. Circuit de transmission de données selon la revendication 6, dans lequel la première impulsion de réinitialisation et la deuxième impulsion de réinitialisation ont les mêmes niveaux de tension.

8. Circuit de transmission de données selon la revendication 6, dans lequel le signal de données comprend :
une donnée d'adresse (130) ;
une donnée de détermination de lecture/écriture (140) ; et
des bits de données (160) transmis entre le premier appareil et le deuxième appareil en fonction de la donnée d'adresse et de la donnée de détermination de lecture/écriture ;
dans lequel si la donnée de détermination de lecture/écriture est un premier niveau de tension, les bits de données sont transmis du premier appareil au deuxième appareil, et
dans lequel si la donnée de détermination de lecture/écriture est un deuxième niveau de tension, les bits de données sont transmis du deuxième appareil au premier appareil.

9. Circuit de transmission de données selon la revendication 8, dans lequel la deuxième broche produit la deuxième impulsion de réinitialisation pendant la période de survenance de la première impulsion de réinitialisation, et le front montant (r_{d}) de la deuxième impulsion de réinitialisation se produit après le front montant (r_{c}) de la première impulsion de réinitialisation, et le front descendant (f_{d}) de la deuxième impulsion de réinitialisation se produit avant le front descendant (f_{c}) de la première impulsion de réinitialisation.

10. Circuit de transmission de données selon la revendication 6, dans lequel l'unité d'exploitation est un dispositif logique programmable complexe (CPLD) ayant la première broche et la deuxième broche d.
